# EUROPÄISCHE PATENTSCHRIFT

(11) **EP 1 760 194 B1**
(45) Veröffentlichungstag und Bekanntmachung des Hinweises auf die Patenterteilung: **24.08.2011**
(21) Anmeldenummer: 06112060.6
(22) Anmeldetag: 31.03.2006
(51) Int. Cl.: D21G 1/02, F16C 13/00

(54) **Biegeeinstellwalze**
Controlled deflection roll
Rouleau à réglage de la flexion

(30) Priorität: 29.08.2005 DE 102005040868
(43) Veröffentlichungstag der Anmeldung: 07.03.2007
(60) Teilanmeldung: 07013736.9
(73) Patentinhaber: Voith Patent GmbH, 89522 Heidenheim (DE)
(72) Erfinder: Baumeister, Thomas, 47918 Tönisvorst (DE); Conrad, Hans-Rolf, 41539 Dormagen (DE); Wiemer, Peter, Dr. rer. nat., 41532 Korschenbroich (DE); Löffler, Christian, 47608 Geldern (DE); Autrata, Jochen, 47506 Neukirchen-Vluyn (DE); Linder, Heiko, 47506 Neukirchen-Vluyn (DE); Dries, Olaf, 40882 Ratingen (DE); Eßling, Andreas, 46395 Bocholt (DE); Beckers, Ralf, 47906 Kempen (DE); Michelkens, Franz-Josef, 47929 Grefrath (DE)
(74) Vertreter: Manitz, Gerhart

(56) Entgegenhaltungen:
- EP-A- 1 529 877
- WO-A-99/58761
- WO-A-03/067106
- WO-A-03/076714

## Beschreibung

Die Erfindung betrifft eine Biegeeinstellwalze mit einer glatten, harten Oberfläche zur Herstellung und/oder Behandlung einer Faserstoffbahn, insbesondere Papier-, Karton- oder Tissuebahn, bei der der Walzenmantel einen Grundmantel aus schweißbarem Stahl umfasst, auf den zumindest eine Schweißschicht aufgebracht ist, die eine größere Härte besitzt als der Grundmantel. Sie betrifft ferner ein Verfahren zur Herstellung einer solchen Walze gemäß dem Oberbegriff des Anspruchs 13. Eine Biegeeinstellwalze sowie ein Verfahren dieser Art sind aus der WO 99/58761 A bekannt.

Bisher wurden als harte Walzen mit besonders glatter Oberfläche nur Hartgusswalzen oder geschmiedete und induktiv gehärtete Stahlwalzen eingesetzt. Diese Walzentypen sind relativ teuer und nur in bestimmten, d.h. relativ großen Abmessungen auf dem Markt erhältlich. Zudem sind diese Walzen in der Regel mit relativ großen Eigenspannungsproblemen behaftet. Überdies wäre eine höhere Verschleißfestigkeit dieser Walzen erwünscht.

Ein weiterer Nachteil der herkömmlichen Durchbiegungseinstellwalzen besteht darin, dass im Fall einer jeweiligen Beschädigung eine Hartgusswalze nur abgedreht werden kann.

Neben Hartgusswalzen und gehärteten Stahlwalzen ist auch Chromguss (KSTV) im Einsatz. Chromguss hat den Nachteil, dass das Material durchgehärtet ist, obwohl die Härte nur an der Oberfläche benötigt wird, wodurch ein solcher Mantel anfälliger gegen stoßartige Belastungen wird und zudem die Fertigung enorm aufwändig wird. Es gibt Mindestwandstärken seitens des Herstellers.

Hartgusswalzen haben relativ große fertigungsbedingte Mindestwandstärken, was ein Nachteil für eine Zonenprofilierungswalze ist, da Zonenreaktionen im Nip umso effektiver sind, je dünnwandiger ein Mantel ist.

Beispielsweise bei Rädern von Schienenfahrzeugen und Stahlwalzwerken ist bereits die Anwendung einer so genannten "Panzerschweißung" bekannt.

Bei einem aus der WO 99/58761 A bekannten Verfahren zur Herstellung einer Biegeeinstellwalze wird auf den Grundmantel der Walze nach einem pulvermetallurgischen Verfahren und vorzugsweise durch heißisostatisches Pressen eine äußere Schicht aufgebracht, deren mechanische Festigkeit höher ist als die des Grundmantels.

Aus der WO 03/067106 A ist ein Verfahren zur Herstellung einer Biegeeinstellwalze bekannt, bei dem zur Erhöhung der Verschleißfestigkeit auf die Innenseite des Grundmantels der Walze durch Schweißen eines Stahlbandes oder -blattes eine Metallschicht aufgebracht wird.

Der Erfindung liegt die Aufgabe zugrunde, eine verbesserte Biegeeinstellwalze sowie ein verbessertes Verfahren der eingangs genannten Art zu schaffen, bei dem die zuvor genannten Nachteile beseitigt sind.

Diese Aufgabe wird bezüglich der Biegeeinstellwalze erfindungsgemäß dadurch gelöst, dass die Härte der Schweißschicht ausgehend vom Grundmantel radial nach außen zunimmt und dass die Biegeeinstellwalze eine Oberflächenhärte nach Vickers ≥ 600 HV, insbesondere ≥ 700 HV, insbesondere ≥ 750 HV und vorzugsweise von etwa 800 HV, besitzt.

Der Walzenmantel kann somit aus einem relativ einfachen schweißbaren Stahl bestehen, auf den eine die gewünschte Eigenschaften besitzende Schicht aufgeschweißt wird. Die Eigenspannungen in der Walze werden reduziert. Die konstante Härteschichtdicke sorgt für eine bessere Formstabilität der Walze. Auch bei induktiv gehärteten Schmiedestahlwalzen lässt sich die Härtetiefe zwar genau festlegen, hier kommt es jedoch zu einem Eigenspannungspeak beim Übergang zwischen gehärteter zu ungehärteter Schicht.

Da eine sich schweißende Metalllegierung relativ frei bestimmbare Bestandteile besitzt, lassen sich daraus die physikalischen und chemischen Eigenschaften der Schweißschicht bzw. deren Lagen in der gewünschten Weise variabel einstellen. Indem erfindungsgemäß die Härte ausgehend vom insbesondere zähen Grundmantel radial nach außen zunimmt, werden Eigenspannungen reduziert.

Ein weiterer entscheidender Vorteil besteht in sich ergebenden verbesserten Reparaturmöglichkeiten. So kann die Walze nach einer jeweiligen Beschädigung durch erneutes Auftragschweißen repariert werden. Demgegenüber kann eine beschädigte Hartgusswalze für eine entsprechende Reparatur nur abgedreht werden.

Zudem kann Gewicht eingespart werden, so dass beispielsweise in einem Kalander erforderlichenfalls wesentlich niedrigere Streckenlasten gefahren werden können. Bei mehreren übereinander angeordneten Walzen wird die sich aufgrund des darüber befindlichen Walzengewichts ergebende Streckenlast im untersten Nip geringer, was zur Folge hat, dass man bei gleicher limitierter maximaler Streckenlast im untersten Nip im obersten Nip bereits viel höhere Lasten fahren kann.

Die Schweißschicht besteht vorzugsweise aus einer mit dem Grundmantel verschweißbaren Metalllegierung. Grundsätzlich können alle mit dem Grundmantel verschweißbaren Metalllegierungen aufgebracht werden.

Zweckmäßigerweise ist die Schweißschicht spiralförmig auf dem Grundmantel aufgebracht. Die Schicht kann also beispielsweise bei sich drehendem Grundmantel aufgeschweißt werden.

Die Schweißschicht kann durch eine oder auch durch mehrere Schweißlagen gebildet sein.

Die bevorzugte Dicke für eine jeweilige Schweißlage liegt bei etwa 3 mm.

Bei einer zweckmäßigen praktischen Ausführungsform der erfindungsgemäßen Biegeeinstellwalze liegt die Gesamtdicke der Schweißschicht nach der Endbearbeitung in einem Bereich von etwa 1 bis etwa 20 mm, vorzugsweise in einem Bereich von etwa 3 bis etwa 10 mm.

Der Walzenmantel ist bevorzugt über wenigstens ein Stützelement drehbar auf einem drehfesten Joch abgestützt. Dabei kann über die entsprechenden Stützelemente insbesondere auch eine Zonenprofilsteuerung der Walze vorgesehen sein.

Von besonderem Vorteil ist, wenn der Grundmantel durch ein rundgebogenes Blech, zweckmäßigerweise ein längsnahtgeschweißtes Blech gebildet ist. Dabei kann vorteilhafterweise ein relativ dünnes Blech verwendet werden. So kann der Grundmantel beispielsweise eine Stärke in einem Bereich von etwa 4 bis etwa 8 % des Walzeninnendurchmessers besitzen. Beispielsweise bei einem Innendurchmesser von 900 mm würde die Mantelstärke also in einem Bereich von 36 bis 72 mm und bei einem Innendurchmesser von z.B. 400 mm in einem Bereich von 16 bis 32 mm liegen.

Derartige, beispielsweise einen Grundmantel aus rundgebogenem Blech aufweisende Walzenmäntel mit einer aufgeschweißten harten Schicht eignen sich in idealer Weise beispielsweise für eine Zonenprofilsteuerung über in der Walze vorgesehene Stützelemente. Mit Hartguss würde man nie entsprechend elastische dünne Mantelwandstärken erreichen. Zudem ist aufgrund der erfindungsgemäßen Lösung der Walzendurchmesser individuell an den jeweiligen Einzelfall anpassbar. Es besteht also keine Abhängigkeit mehr von Kokillengrößen. Schließlich entfallen die für die bisherigen Walzen üblichen langen Beschaffungszeiten.

Bezüglich des Verfahrens wird die oben angegebene Aufgabe nach der Erfindung entsprechend dadurch gelöst, dass die Schweißschicht mit einer ausgehend vom Grundmaterial radial nach außen zunehmenden Härte erzeugt wird, und dass mit der Schweißschicht eine Oberflächenhärte nach Vickers ≥ 600 HV, insbesondere ≥ 700 HV, insbesondere ≥ 750 HV und vorzugsweise von etwa 800 HV, erzeugt wird.

Dabei erfolgt das Aufschweißen der Schweißschicht bevorzugt unter Pulver oder unter Schutzgas und durch eine Materialzugabe in Form wenigstens eines Bandes oder Drahtes.

Wie bereits erwähnt, kann die Schweißschicht vorteilhafterweise bei sich drehendem Grundmantel spiralförmig aufgebracht werden.

In den Unteransprüchen sind weitere vorteilhafte Ausgestaltungen dieses Verfahrens angegeben.

Gemäß einer vorteilhaften Ausgestaltung des erfindungsgemäßen Verfahrens werden die endgültigen Werkstoffeigenschaften der Beschichtung nach dem Schweißauftrag durch eine entsprechende Wärmebehandlung eingestellt, die eine Glühbehandlung umfasst, wobei die über die nachträgliche Wärmebehandlung einstellbaren Werkstoffeigenschaften die Zähigkeit, die Gefügestruktur, die Formstabilität, die Eigenspannung, die Härte und/oder dergleichen umfassen.

Es kann also beispielsweise ein Stahlgrundmantel mit einer harten Auftragsschweißschicht versehen und der so beschichtete Walzenmantel einer anschließenden Wärmebehandlung unterzogen werden.

Die Schweißschicht ist bevorzugt in Verbindung mit einer Wolframcarbidschicht vorgesehen.

Soweit hier von einer glatten Oberfläche die Rede ist, ist diese bevorzugt durch einen Rauigkeitswert Ra in einem Bereich von etwa 0,01 bis etwa 0,2 µm definiert.

## Patentansprüche

1. Biegeeinstellwalze mit einer glatten, harten Oberfläche zur Herstellung und/oder Behandlung einer Faserstoffbahn, insbesondere Papier-, Karton- oder Tissuebahn, bei der ein Walzenmantel der Biegeeinstellwalze einen Grundmantel aus schweißbarem Stahl umfasst, auf den zumindest eine Schweißschicht aufgebracht ist, die eine größere Härte besitzt als der Grundmantel,
**dadurch gekennzeichnet,**
**dass** die Härte der Schweißschicht ausgehend vom Grundmantel radial nach außen zunimmt und dass die Biegeeinstellwalze eine Oberflächenhärte nach Vickers ≥ 600 HV, insbesondere ≥ 700 HV, insbesondere ≥ 750 HV und vorzugsweise von etwa 800 HV, besitzt.

2. Biegeeinstellwalze nach Anspruch 1,
**dadurch gekennzeichnet,**
**dass** die Schweißschicht aus einer mit dem Grundmantel verschweißbaren Metalllegierung besteht.

3. Biegeeinstellwalze nach Anspruch 1 oder 2,
**dadurch gekennzeichnet,**
**dass** die Schweißschicht spiralförmig auf den Grundmantel aufgebracht ist.

4. Biegeeinstellwalze nach einem der vorhergehenden Ansprüche,
**dadurch gekennzeichnet,**
**dass** die Schweißschicht kontinuierlich durch eine Umfangsschweißung, anschließend einen Seitenschritt um eine Schweißnahtbreite, anschließend eine weitere Umfangsschweißung, usw. auf den Grundmantel aufgebracht ist.

5. Biegeeinstellwalze nach einem der vorhergehenden Ansprüche,
**dadurch gekennzeichnet,**
**dass** die Schweißschicht durch wenigstens zwei Schweißlagen gebildet ist.

6. Biegeeinstellwalze nach Anspruch 5,
**dadurch gekennzeichnet,**
**dass** die Dicke einer jeweiligen Schweißlage etwa 3 mm beträgt.

7. Biegeeinstellwalze nach einem der vorhergehenden Ansprüche,
**dadurch gekennzeichnet,**
**dass** die Gesamtdicke der Schweißschicht nach der Endbearbeitung in einem Bereich von etwa 1 bis etwa 20 mm, vorzugsweise in einem bereich von etwa 3 bis etwa 10 mm liegt.

8. Biegeeinstellwalze nach einem der vorhergehenden Ansprüche,
**dadurch gekennzeichnet,**
**dass** der Walzenmantel über wenigstens ein Stützelement drehbar auf einem drehfesten Joch abgestützt ist.

9. Biegeeinstellwalze nach einem der vorhergehenden Ansprüche,
**dadurch gekennzeichnet,**
**dass** der Grundmantel durch ein rundgebogenes Blech gebildet ist.

10. Biegeeinstellwalze nach Anspruch 9,
**dadurch gekennzeichnet,**
**dass** der Grundmantel durch ein längsnahtgeschweißtes Blech gebildet ist.

11. Biegeeinstellwalze nach einem der vorhergehenden Ansprüche,
**dadurch gekennzeichnet,**
**dass** der Grundmantel eine Stärke in einem Bereich von etwa 4 bis etwa 8 % des Walzeninnendurchmessers besitzt.

12. Biegeeinstellwalze nach einem der vorhergehenden Ansprüche,
**dadurch gekennzeichnet,**
**dass** die Schweißschicht in Verbindung mit einer Wolframcarbidschicht vorgesehen ist.

13. Verfahren zur Herstellung einer mit einer glatten, harten Oberfläche versehenen Biegeeinstellwalze, bei dem ein Walzenmantel der Biegeeinstellwalze einen Grundmantel aus schweißbarem Stahl umfasst, auf den zumindest eine Schweißschicht aufgebracht wird, die eine größere Härte besitzt als der Grundmantel,
**dadurch gekennzeichnet,**
**dass** die Schweißschicht mit einer ausgehend vom Grundmantel radial nach außen zunehmenden Härte erzeugt wird und dass mit der Schweißschicht eine Oberflächenhärte nach Vickers ≥ 600 HV, insbesondere ≥ 700 HV, insbesondere ≥ 750 HV und vorzugsweise von etwa 800 HV, erzeugt wird

14. Verfahren nach Anspruch 13,
**dadurch gekennzeichnet,**
**dass** das Aufschweißen der Schweißschicht unter Pulver oder unter Schutzgas und durch eine Materialzugabe in Form wenigstens eines Bandes oder Drahtes erfolgt.

15. Verfahren nach Anspruch 13 oder 14,
**dadurch gekennzeichnet,**
**dass** die Schweißschicht durch eine mit dem Grundmantel verschweißbare Metalllegierung gebildet wird.

16. Verfahren nach einem der vorhergehenden Ansprüche 13 bis 15,
**dadurch gekennzeichnet,**
**dass** die Schweißschicht bei sich drehendem Grundmantel spiralförmig aufgebracht wird.

17. Verfahren nach einem der vorhergehenden Ansprüche 13 bis 16,
**dadurch gekennzeichnet,**
**dass** die Schweißschicht kontinuierlich durch eine Umfangsschweißung, anschließend einen Seitenschritt um eine Schweißnahtbreite, anschließend eine weitere Umfangsschweißung, usw. auf den Grundmantel aufgebracht wird.

18. Verfahren nach einem der vorhergehenden Ansprüche 13 bis 17,
**dadurch gekennzeichnet,**
**dass** die Schweißschicht durch wenigstens zwei Schweißlagen gebildet wird.

19. Verfahren nach Anspruch 18
**dadurch gekennzeichnet,**
**dass** die Dicke einer jeweiligen Schweißlage etwa 3 mm gewählt wird.

20. Verfahren nach einem der vorhergehenden Ansprüche 13 bis 19,
**dadurch gekennzeichnet,**
**dass** die Gesamtdicke der Schweißschicht nach der Endbearbeitung in einem Bereich von etwa 1 bis etwa 20 mm, vorzugsweise in einem Bereich von etwa 3 bis etwa 10 mm gewählt wird.

21. Verfahren nach einem der vorhergehenden Ansprüch 13 bis 20,
**dadurch gekennzeichnet,**
**dass** der Grundmantel durch ein rundgebogenes Blech gebildet wird.

22. Verfahren nach einem der vorhergehenden Ansprüche 13 bis 21,
**dadurch gekennzeichnet,**
**dass** der Grundmantel durch ein längsnahtgeschweißtes Blech gebildet wird.

23. Verfahren nach einem der vorhergehenden Ansprüche 13 bis 22,
**dadurch gekennzeichnet,**
**dass** der Grundmantel mit einer eine Stärke in einem Bereich von etwa 4 bis etwa 8 % des Walzeninnendurchmessers gefertigt wird.

24. Verfahren nach einem der vorhergehenden Ansprüche 13 bis 23,
**dadurch gekennzeichnet,**
**dass** die endgültigen Werkstoffeigenschaften der Beschichtung nach dem Schweißauftrag durch eine entsprechende Wärmebehandlung eingestellt werden, die eine Glühbehandlung umfasst, wobei die über die nachträgliche Wärmebehandlung einstellbaren Werkstoffeigenschaften die Zähigkeit, die Gefügestruktur, die Formstabilität, die Eigenspannung, die Härte und/oder dergleichen umfassen.

25. Verfahren nach einem der vorhergehenden Ansprüche 13 bis 24,
**dadurch gekennzeichnet,**
**dass** die Schweißschicht in Verbindung mit einer Wolframcarbidschicht vorgesehen ist.

## Claims

1. A deflection controlled roll having a smooth, hard surface for manufacturing and/or treating a fibre web, in particular a paper web, a cardboard web or a tissue web, wherein a roll jacket of the deflection controlled roll includes a base jacket of weldable steel onto which at least one welding layer is applied which has a greater hardness than the base jacket,
**characterised in that**
the hardness of the welding layer increases radially outwardly starting from the base jacket; and **in that** the deflection controlled roll has a Vickers surface hardness ≥ 600 HV, in particular ≥ 700 HV, in particular ≥ 750 HV, and preferably of approximately 800 HV.

2. A deflection controlled roll in accordance with claim 1,
**characterised in that**
the welding layer comprises a metal alloy weldable to the base jacket.

3. A deflection controlled roll in accordance with claim 1 or claim 2,
**characterised in that**
the welding layer is applied to the base jacket in spiral form.

4. A deflection controlled roll in accordance with any one of the preceding claims,
**characterised in that**
the welding layer is applied continuously by a circumferential welding, subsequently by a side step about a welding seam width, subsequently by a further circumferential welding, etc. onto the base jacket.

5. A deflection controlled roll in accordance with any one of the preceding claims,
**characterised in that**
the welding layer is formed by at least two welding coats.

6. A deflection controlled roll in accordance with claim 5,
**characterised in that**
the thickness of a respective welding coat amounts to approximately 3 mm.

7. A deflection controlled roll in accordance with any one of the preceding claims,
**characterised in that**
the total thickness of the welding layer after the end processing is in a range from approximately 1 to approximately 20 mm, preferably in a range from approximately 3 to approximately 10 mm.

8. A deflection controlled roll in accordance with any one of the preceding claims,
**characterised in that**
the roll jacket is rotatably supported on a rotationally fixed yoke via at least one support element.

9. A deflection controlled roll in accordance with any one of the preceding claims,
**characterised in that**
the base jacket is formed by a round-curved metal sheet.

10. A deflection controlled roll in accordance with claim 9,
**characterised in that**
the base jacket is formed by a longitudinal seam-welded metal sheet.

11. A deflection controlled roll in accordance with any one of the preceding claims,
**characterised in that**
the base jacket has a thickness in a range from approximately 4 to approximately 8% of the inner diameter of the roll.

12. A deflection controlled roll in accordance with any one of the preceding claims,
**characterised in that**
the welding layer is provided in conjunction with a tungsten carbide layer.

13. A method of manufacturing a deflection controlled roll provided with a smooth, hard surface, wherein a roll jacket of the deflection controlled roll includes a base jacket of weldable steel onto which at least one welding layer is applied which has a greater hardness than the base jacket,
**characterised in that**
the welding layer is produced with a hardness increasing radially outwardly starting from the base jacket; and **in that** a Vickers hardness ≥ 600 HV, in particular ≥ 700 HV, in particular ≥ 750, preferably of approximately 800 HV, is produced by the welding layer.

14. A method in accordance with claim 13,
**characterised in that**
the welding on of the welding layer takes place under powder or under an inert gas and by a material addition in the form of at least one band or wire.

15. A method in accordance with claim 13 or claim 14,
**characterised in that**
the welding layer is formed by a metal alloy weldable to the base material.

16. A method in accordance with any one of the preceding claims 13 to 15,
**characterised in that**
the welding layer is applied in spiral form with a rotating base jacket.

17. A method in accordance with any one of the preceding claims 13 to 16,
**characterised in that**
the welding layer is applied continuously by a circumferential welding, subsequently by a side step about a welding seam width, subsequently by a further circumferential welding, etc. onto the base jacket.

18. A method in accordance with any one of the preceding claims 13 to 17,
**characterised in that**
the welding layer is formed by at least two welding coats.

19. A method in accordance with claim 18,
**characterised in that**
the thickness of a respective welding coat is selected as approximately 3 mm.

20. A method in accordance with any one of the preceding claims 13 to 19,
**characterised in that**
the total thickness of the welding layer after the end processing is selected in a range from approximately 1 to approximately 20 mm, preferably in a range from approximately 3 to approximately 10 mm.

21. A method in accordance with any one of the preceding claims 13 to 20,
**characterised in that**
the base jacket is formed by a round-curved metal sheet.

22. A method in accordance with any one of the preceding claims 13 to 21,
**characterised in that**
the base jacket is formed by a longitudinal seam-welded metal sheet.

23. A method in accordance with any one of the preceding claims 13 to 22,
**characterised in that**
the base jacket is produced with a thickness in a range from approximately 4 to approximately 8% of an inner diameter of a roll.

24. A method in accordance with any one of the preceding claims 13 to 23,
**characterised in that**
the final material properties of the coating are set after the welding application by a corresponding thermal treatment which includes annealing, with the material properties settable via the subsequent thermal treatment including the toughness, the texture structure, the shape stability, the internal tension, the hardness and/or the like.

25. A method in accordance with any one of the preceding claims 13 to 24,
**characterised in that**
the welding layer is provided in conjunction with a tungsten carbide layer.

## Revendications

1. Cylindre à flexion réglable comportant une surface lisse et dure pour la production et/ou le traitement d'une nappe de matières fibreuses, en particulier une nappe de papier, de carton ou de papier de toilette, dans laquelle une enveloppe de cylindre du cylindre à flexion réglable comprend une enveloppe de base en acier capable d'être soudé, sur laquelle est rapportée au moins une couche soudée qui possède une dureté plus élevée que l'enveloppe de base,
**caractérisé en ce que** la dureté de la couche soudée augmente radialement vers l'extérieur en partant de l'enveloppe de base, et **en ce que** le cylindre à flexion réglable possède une dureté Vickers de surface ≥ 600 HV, en particulier ≥ 700 HV, en particulier ≥ 750 HV, et de préférence environ 800 HV.

2. Cylindre à flexion réglable selon la revendication 1,
**caractérisé en ce que** la couche soudée est en un alliage métallique capable d'être soudé avec l'enveloppe de base.

3. Cylindre à flexion réglable selon la revendication 1 ou 2,
**caractérisé en ce que** la couche soudée est rapportée en forme de spirale sur l'enveloppe de base.

4. Cylindre à flexion réglable selon l'une des revendications précédentes,
**caractérisé en ce que** la couche soudée est rapportée en continu par un soudage périphérique, suivi d'un saut latéral de la largeur d'un cordon de soudure, suivi d'un autre soudage périphérique, et ainsi de suite, sur l'enveloppe de base.

5. Cylindre à flexion réglable selon l'une des revendications précédentes,
**caractérisé en ce que** la couche soudée est formée par au moins deux nappes soudées.

6. Cylindre à flexion réglable selon la revendication 5,
**caractérisé en ce que** l'épaisseur d'une nappe soudée respective est d'environ 3 mm.

7. Cylindre à flexion réglable selon l'une des revendications précédentes,
**caractérisé en ce que** l'épaisseur totale de la couche soudée après usinage final est dans une plage d'environ 1 à environ 20 mm, de préférence dans une plage d'environ 3 à environ 10 mm.

8. Cylindre à flexion réglable selon l'une des revendications précédentes,
**caractérisé en ce que** l'enveloppe du cylindre est soutenue via au moins un élément de soutien avec possibilité de rotation sur un étrier solidaire en rotation.

9. Cylindre à flexion réglable selon l'une des revendications précédentes,
**caractérisé en ce que** l'enveloppe de base est formée par une tôle cintrée en rond.

10. Cylindre à flexion réglable selon la revendication 9,
**caractérisé en ce que** l'enveloppe de base est formée par une tôle soudée avec un cordon de soudure longitudinal.

11. Cylindre à flexion réglable selon l'une des revendications précédentes,
**caractérisé en ce que** l'enveloppe de base possède une épaisseur dans une plage d'environ 4 à environ 8 % du diamètre intérieur du cylindre.

12. Cylindre à flexion réglable selon l'une des revendications précédentes,
**caractérisé en ce que** la couche soudée est prévue en liaison avec une couche de carbure de tungstène.

13. Procédé pour la fabrication d'un cylindre à flexion réglable doté d'une surface lisse et dure, dans lequel une enveloppe de cylindre du cylindre à flexion réglable comprend une enveloppe de base en acier capable d'être soudé sur laquelle on rapporte au moins une couche soudée qui possède une dureté plus élevée que l'enveloppe de base,
**caractérisé en ce que** la couche soudée est engendrée avec une dureté qui augmente radialement vers l'extérieur en partant de l'enveloppe de base, et **en ce que** l'on engendre avec la couche soudée une dureté Vickers de surface ≥ 600 HV, en particulier ≥ 700 HV, en particulier ≥ 750 HV, et de préférence environ 800 HV.

14. Procédé selon la revendication 13,
**caractérisé en ce que** l'application par soudure de la couche soudée a lieu sous de la poudre ou sous un gaz protecteur, et par un apport de matériau sous la forme d'au moins une bande ou un fil.

15. Procédé selon la revendication 13 ou 14,
**caractérisé en ce que** la couche soudée est formée d'un alliage de métal capable d'être soudé avec l'enveloppe de base.

16. Procédé selon l'une des revendications précédentes 13 à 15,
**caractérisé en ce que** la couche soudée est rapportée en forme de spirale alors que l'enveloppe de base est en rotation.

17. Procédé selon l'une des revendications précédentes 13 à 16,
**caractérisé en ce que** la couche soudée est rapportée en continu par un soudage périphérique, suivi d'un saut latéral à raison de la largeur d'un cordon de soudure, suivi d'un autre soudage périphérique, et ainsi de suite, sur l'enveloppe de base.

18. Procédé selon l'une des revendications précédentes 13 à 17,
**caractérisé en ce que** la couche soudée est formée par au moins deux nappes soudées.

19. Procédé selon la revendication 189,
**caractérisé en ce que** l'épaisseur d'une nappe soudée respective est choisie d'environ 3 mm.

20. Procédé selon l'une des revendications précédentes 13 à 19,
**caractérisé en ce que** l'épaisseur totale de la couche soudée après usinage final est choisie dans une plage d'environ 1 à environ 20 mm, de préférence dans une plage d'environ 3 jusqu'à environ 10 mm.

21. Procédé selon l'une des revendications précédentes 13 à 20,
**caractérisé en ce que** l'enveloppe de base est formée par une tôle cintrée en rond.

22. Procédé selon l'une des revendications précédentes 13 à 21,
**caractérisé en ce que** l'enveloppe de base est formée par une tôle soudée avec un cordon de soudure longitudinal.

23. Procédé selon l'une des revendications précédentes 13 à 22,
**caractérisé en ce que** l'enveloppe de base est réalisée avec une épaisseur dans une plage d'environ 4 à environ 8 % d'un diamètre intérieur du cylindre.

24. Procédé selon l'une des revendications précédentes 13 à 23,
les propriétés du matériau définitives du matériau du revêtement sont établies après l'apport de soudure par un traitement thermique correspondant, qui comprend un traitement de recuit, et les propriétés du matériau qui peuvent être établies grâce au traitement thermique postérieur comprennent la ténacité, la structure de texture, la stabilité de forme, la contrainte résiduelle, la dureté et/ou similaires.

25. Procédé selon l'une des revendications précédentes 13 à 24,
**caractérisé en ce que** la couche soudée est prévue en liaison avec une couche de carbure de tungstène.
